(19) Europäisches Patentamt
European Patent Office
Office européen des brevets

(11) **EP 4 047 523 A1**

(12) **EUROPÄISCHE PATENTANMELDUNG**

(43) Veröffentlichungstag:
**24.08.2022 Patentblatt 2022/34**

(21) Anmeldenummer: **21158487.5**

(22) Anmeldetag: **22.02.2021**

(51) Internationale Patentklassifikation (IPC):
*G06N 3/00* (2006.01)    *F16P 3/12* (2006.01)

(52) Gemeinsame Patentklassifikation (CPC):
**F16P 3/142; F16P 3/144; F16P 3/147; G06N 3/00**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Leuze electronic GmbH + Co. KG**
**73277 Owen/Teck (DE)**

(72) Erfinder:
• **Sanzi, Friedrich**
  **73230 Kirchheim/Teck (DE)**
• **Feller, Bernhard**
  **86316 Friedberg (DE)**
• **Quapil, Gerald**
  **73277 Owen/Teck (DE)**

(74) Vertreter: **Ruckh, Rainer Gerhard**
**Patentanwalt**
**Jurastrasse 1**
**73087 Bad Boll (DE)**

(54) **ÜBERWACHUNGSEINRICHTUNG UND VERFAHREN ZUM BETRIEB EINER ÜBERWACHUNGSEINRICHTUNG**

(57) Die Erfindung betrifft eine Überwachungseinrichtung (1) mit einem Sicherheitssensor (71) und einer von einer Anlagensteuerung (80) gesteuerten Anlage (81). Mit dem Sicherheitssensor (71) wird ein Gefahrenbereich (72) überwacht, wobei bei Registrieren eines Objekteingriffs im Gefahrenbereich (72) mittels des Sensors ein Schaltsignal (40) generiert wird, das an die Anlagensteuerung (80) ausgegeben wird, wodurch eine Sicherheitsfunktion für die Anlage (81) ausgelöst wird. Ein Auswertesystem ist vorgesehen, in welchem Messdaten des Sicherheitssensors (71) oder eines Sensors durch wenigstens ein neuronales System (60) bewertet werden. Abhängig von dieser Bewertung werden Warnmeldungen und/oder Korrektureingriffe (641) für Bewegungsabläufe der Anlage (81) generiert. Die Erfindung betrifft weiterhin ein Verfahren zum Betrieb einer Überwachungseinrichtung (1).

Fig. 1

EP 4 047 523 A1

**Beschreibung**

Die Erfindung betrifft eine Überwachungseinrichtung und ein Verfahren zum Betrieb einer Überwachungseinrichtung.

Derartige Überwachungseinrichtungen umfassen generell einen Sicherheitssensor mit dem ein Gefahrenbereich an einer Anlage überwacht wird. Die Anlage, die von einer Anlagensteuerung gesteuert wird, kann von einer stationären Maschine gebildet sein. Alternativ kann die Anlage von einem Fahrzeug gebildet sein, wobei dann mit dem Sicherheitssensor das Vorfeld des Fahrzeugs als Gefahrenbereich überwacht wird.

Die Funktionsweise der Überwachungseinrichtung ist derart, dass mit dem Sicherheitssensor überwacht wird, ob ein Objekteingriff im Gefahrenbereich vorliegt. Typischerweise wird mit dem Sicherheitssensor, der beispielsweise als Flächendistanzsensor oder Lichtvorhang ausgebildet sein kann, ein den Gefahrenbereich abdeckendes Schutzfeld überwacht. Im Sicherheitssensor wird ein binäres Schaltsignal generiert, dessen Schaltzustände angeben, ob sich ein Objekt im Schutzfeld befindet oder nicht. Wird mit dem Sicherheitssensor ein Objekt im Schutzfeld registriert, wird durch das entsprechende Schaltsignal in der Anlagensteuerung eine Sicherheitsfunktion ausgelöst, welche insbesondere darin besteht, die Anlage stillzusetzen, so dass von der Anlage keine Gefahren mehr ausgehen können.

Der Erfindung liegt die Aufgabe zugrunde eine Überwachungseinrichtung mit erweiterter Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor und einer von einer Anlagensteuerung gesteuerten Anlage. Mit dem Sicherheitssensor wird ein Gefahrenbereich überwacht. Bei Registrieren eines Objekteingriffs im Gefahrenbereich mittels des Sensors wird ein Schaltsignal generiert, das an die Anlagensteuerung ausgegeben wird, wodurch eine Sicherheitsfunktion für die Anlage ausgelöst wird. Ein Auswertesystem ist vorgesehen, in welchem Messdaten des Sicherheitssensors oder eines Sensors durch wenigstens ein neuronales System bewertet werden. Abhängig von dieser Bewertung werden Warnmeldungen und/oder Korrektureingriffe für Bewegungsabläufe der Anlage generiert.

Die Erfindung betrifft weiterhin ein Verfahren zum Betrieb einer Überwachungseinrichtung.

Die Grundfunktion der Überwachungseinrichtung besteht darin, mit dem Sicherheitssensor eine Anlage derart abzusichern, dass bei einem Objekteingriff, insbesondere einem sicherheitskritischen Objekteingriff wie zum Beispiel dem Eintreten einer Person in den Gefahrenbereich, eine Sicherheitsfunktion generiert wird, die die Anlage in einen sicheren Zustand überführt, in welchem von der Anlage keine Gefahren mehr ausgehen können. Insbesondere besteht die Sicherheitsfunktion darin, die Anlage stillzusetzen.

Die Anlage kann dabei sowohl von einer stationären Maschine als auch von einem Fahrzeug gebildet sein.

Zur Bereitstellung dieser Sicherheitsfunktionalität wird insbesondere ein Schutzfeld überwacht, wobei im Sicherheitssensor ein binäres Schaltsignal generiert wird, dessen Schaltzustände angeben, ob ein Objekt im Schutzfeld vorhanden ist oder nicht.

Dabei kann der Sicherheitssensor ein optischer Sensor oder ein Radarsensor sein.

Insbesondere ist der Sicherheitssensor ein Lichtvorhang, ein Flächendistanzsensor oder ein Kamerasensor.

Der Kamerasensor ist dabei insbesondere als distanzmessende 2D- oder 3D-Kamera ausgebildet.

Erfindungsgemäß wird mit der Überwachungseinrichtung zusätzlich zu dieser Sicherheitsfunktionalität eine weitere Funktionalität derart bereitgestellt, dass in einem Auswertesystem Messdaten des Sicherheitssensors selbst oder eines weiteren Sensors, der beispielsweise von einem Bilderfassungssensor gebildet ist, durch wenigstens ein neuronales System bewertet werden. Abhängig von der Bewertung der Messdaten werden im neuronalen System Warnmeldungen und/oder Korrektureingriffe für Bewegungsabläufe der Anlage generiert.

Vorteilhaft werden im neuronalen System generierte Ausgangssignale der Anlagensteuerung zugeführt, in welcher die Warnmeldungen und/oder Korrektureingriffe generiert werden.

Mit den so generierten Warnmeldungen und Korrektureingriffen wird die Verfügbarkeit der überwachten Anlage erheblich erhöht. Das Auslösen der Sicherheitsfunktion, insbesondere das Stillsetzen der Anlage vermindert generell die Verfügbarkeit der Anlage, da diese dann nicht mehr betriebsbereit ist.

Durch die Warnmeldungen und Korrektureingriffe können im Vorfeld Gefahrensituationen, die zur Auslösung der Sicherheitsfunktion führen, vermieden werden. Unnötige Auslösungen der Sicherheitsfunktion werden dadurch vermieden, wodurch die Verfügbarkeit der Anlage erhöht wird.

Vorteilhaft werden optische und/oder akustische Warnmeldungen generiert.

Die optischen Warnmeldungen werden mit Leuchtmeldern oder dergleichen generiert. Die akustischen Warnmeldungen können durch Hupen und dergleichen oder auch durch charakteristische Anlagen- beziehungsweise Maschinengeräusche, die zum Beispiel durch ruckartiges Bremsen oder Beschleunigen generiert werden, erfolgen.

Vorteilhaft ist ein Korrektureingriff durch eine Reduzierung von Geschwindigkeiten, Beschleunigungen, Drehmomenten oder Kräften einer Anlage oder eines Anlagenteils gebildet.

Weiter vorteilhaft ist ein Korrektureingriff durch eine örtliche Anpassung einer Maschinenbewegung und/oder durch ein Ausweichmanöver eines Fahrzeugs gebildet.

Durch diese Korrektureingriffe gehen von der Anlage weniger Gefahren oder Risiken aus, wodurch die Wahrscheinlichkeit, dass der Sicherheitssensor eine Sicherheitsfunktion generiert, reduziert wird, was zu einer Erhöhung der Verfügbarkeit der Anlage führt.

Besonders vorteilhaft wird bei einer reduzierten Geschwindigkeit und/oder einem Ausweichmanöver die Geometrie des Schutzfeldes des Sicherheitssensors angepasst.

Auch durch die situativ angepasste Geometrie des Schutzfeldes kann die Verfügbarkeit der Anlage erhöht werden.

Gemäß einer vorteilhaften Ausführungsform der Erfindung umfasst das neuronale System wenigstens ein neuronales Netz und/oder wenigstens einen neuronalen Entscheidungsbaum.

Dabei werden die Messdaten im neuronalen System mit erlernten Parametern bewertet.

Insbesondere werden die Parameter in realen oder simulierten Trainingssituationen erlernt.

Das neuronale System der erfindungsgemäßen Überwachungseinrichtung bildet somit ein selbstlernendes System, das sich an die jeweiligen Applikationsbedingungen anpasst.

Besonders vorteilhaft werden während des Arbeitsbetriebs die Parameter fortlaufend erlernt und verbessert.

Damit wird während des Arbeitsbetriebs der Überwachungseinrichtung eine fortlaufende Optimierung des neuronalen Systems ermöglicht.

Gemäß einer vorteilhaften Ausführungsform bilden die dem neuronalen System zugeführten Messdaten zeitlich oder räumlich versetzte Sequenzen aus.

Diese Sequenzen können im neuronalen System vorteilhaft zur Generierung der Warnmeldungen und/oder Korrektureingriffe verwendet werden. Weiterhin können diese Sequenzen zum Erlernen der Parameter des neuronalen Systems verwendet werden.

Besonders vorteilhaft weist das neuronale System ein lernendes neuronales System, in welchem Parameter erzeugt werden, und ein anwendendes neuronales System, in welchem die erzeugten Parameter verwendet werden, auf.

Das anwendende neuronale System nutzt dann die erlernten Parameter zur Generierung der Warnmeldungen und/oder Korrektureingriffe.

Vorteilhaft weist das lernende neuronale System mehrere neuronale Netze oder neuronale Entscheidungsbäume auf, welchen zeitlich und/oder räumlich versetzte Messdaten zugeführt werden.

Um eine optimierte Arbeitsweise des neuronalen Systems zu erzielen, können die Auswertesysteme oder die Anlagensteuerung die Ausgänge der neuronalen Netze des lernenden neuronalen Systems auswählen oder kombinieren.

Zweckmäßig wird die Auswahl oder Kombination abhängig von Anlagenzuständen durchgeführt.

Gemäß einer vorteilhaften Ausgestaltung sind Umgebungsbedingungen und/oder betriebsrelevante Randbedingungen in Lernprozesse zum Einlernen von Parametern einbezogen.

Die betriebsrelevanten Randbedingungen können insbesondere auch von Auslösungen von Sicherheitsfunktionen durch den Sicherheitssensor gebildet sein.

Mit dieser Anpassung des neuronalen Systems kann eine noch präzisere Anpassung der Überwachungseinrichtung an die jeweilige Applikation erfolgen.

Gemäß einer vorteilhaften Ausgestaltung sind Warnmeldungen und/oder Korrektureingriffe durch einen Modifizierer veränderbar.

Dadurch können Warnmeldungen und/oder Korrektureingriffe fortlaufend variiert werden, um diese während des Betriebs der Überwachungseinrichtung fortlaufend zu verbessern und an die jeweilige Applikation anzupassen.

Dabei können mit dem Modifizierer durchgeführte Veränderungen von Warnmeldungen und/oder Korrektureingriffen durch einen Zufallsgenerator oder einen deterministischen Algorithmus beeinflusst werden.

Weiterhin ist es möglich, dass mit dem Modifizierer durchgeführte Veränderungen von Warnmeldungen und/oder Korrektureingriffen abhängig von der Häufigkeit von mittels des Sicherheitssensors ausgelösten Sicherheitsfunktionen durchgeführt werden.

Die Erfindung wird im Folgenden anhand der Zeichnungen erläutert. Es zeigen:

Figur 1: Blockschaltbild eines Ausführungsbeispiels der erfindungsgemäßen Überwachungseinrichtung.

Figur 2: Erstes Ausführungsbeispiel eines Sicherheitssensors für die Überwachungseinrichtung gemäß Figur 1.

Figur 3: Zweites Ausführungsbeispiel eines Sicherheitssensors für die Überwachungseinrichtung gemäß Figur 1.

Figur 4: Drittes Ausführungsbeispiel eines Sicherheitssensors für die Überwachungseinrichtung gemäß Figur 1.

Figur 5: Viertes Ausführungsbeispiel eines Sicherheitssensors für die Überwachungseinrichtung gemäß Figur 1.

Figur 6: Beispiel einer Signalauswertung für die Überwachungseinrichtung gemäß Figur 1.

Figur 7:     Funktionsablaufdiagramm für die Überwachungseinheit gemäß Figur 1.

Figur 8:     Variante der Ausführungsform gemäß Figur 7.

Figur 9:     Funktionsablaufdiagramm für ein neuronales System für die Überwachungseinrichtung gemäß Figur 1.

Figur 10:    Erstes Beispiel eines neuronalen Netzes für die Überwachungseinrichtung gemäß Figur 1.

Figur 11:    Zweites Beispiel eines neuronalen Netzes für die Überwachungseinrichtung gemäß Figur 1.

Figur 12:    Beispiel eines neuronalen Entscheidungsbaums für die Überwachungseinrichtung gemäß Figur 1.

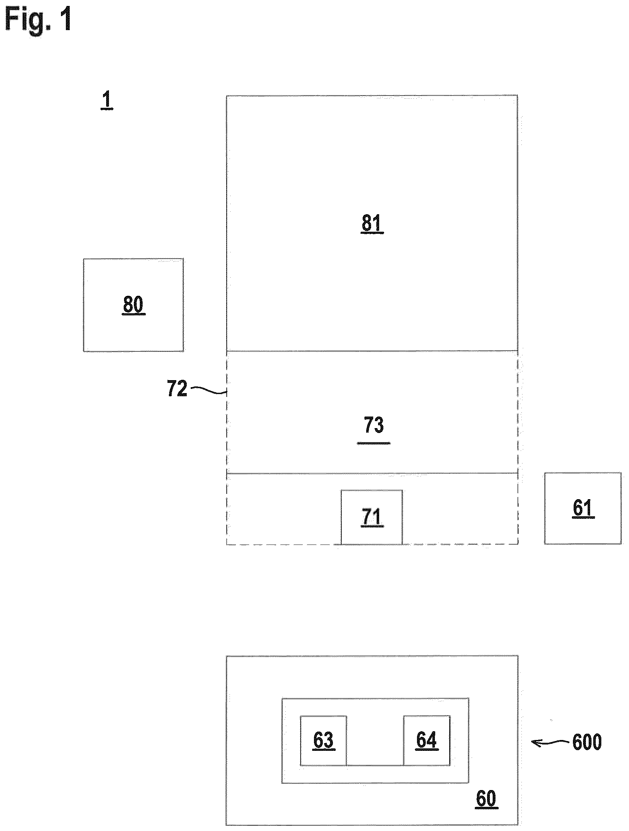

Figur 1 zeigt schematisch ein Ausführungsbeispiel der erfindungsgemäßen Überwachungseinrichtung 1. Die Überwachungseinrichtung 1 dient zur Überwachung und Steuerung einer Anlage 81, die von einer stationären Maschine oder einem Fahrzeug gebildet sein kann. Die Anlage 81 wird von einer Anlagensteuerung 80 gesteuert.

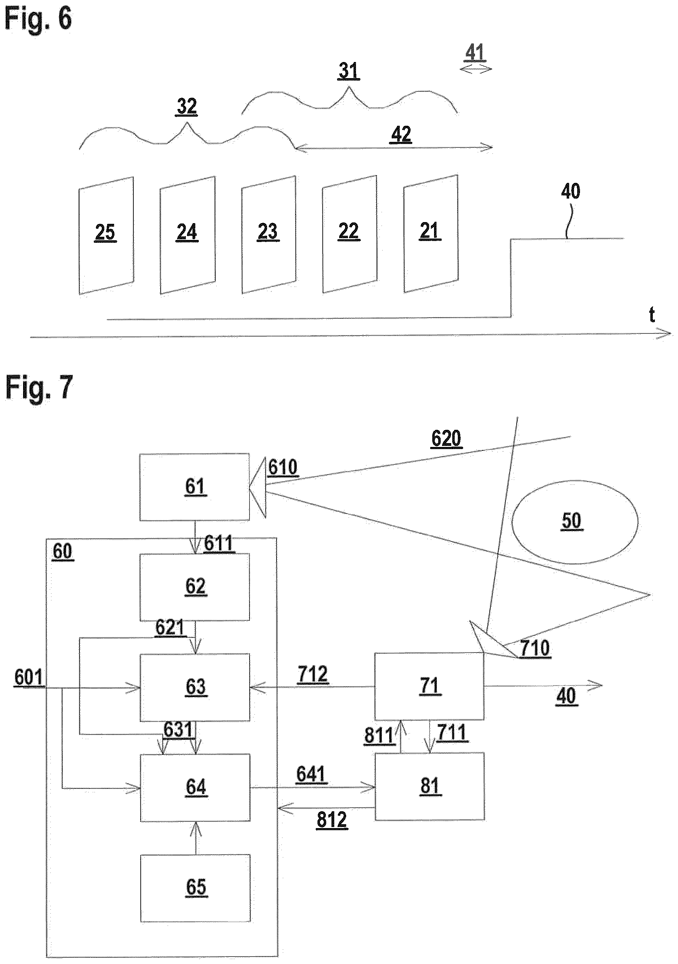

Mit einem Sicherheitssensor 71 wird ein Gefahrenbereich 72 der Anlage 81 überwacht. Hierzu wird mit dem Sicherheitssensor 71 ein Schutzfeld 73 überwacht, das von einem zwei- oder dreidimensionalen Bereich gebildet sein kann. Mit dem Sicherheitssensor 71 wird dabei ein binäres Schaltsignal 40 (Figur 6) generiert, dessen Schaltzustände angeben, ob ein Objekteingriff, insbesondere ein sicherheitskritischer Objekteingriff im Schutzfeld 73 vorhanden ist. Liegt ein solcher Objekteingriff vor, wird durch das entsprechende Schaltsignal 40 in der Anlagensteuerung 80 eine Sicherheitsfunktion ausgelöst, insbesondere die Anlage 81 stillgesetzt, so dass von dieser keine Gefahren mehr ausgehen können.

Erfindungsgemäß weist die Überwachungseinrichtung 1 ein Auswertesystem mit einem neuronalen System 60 auf, das im vorliegenden Fall ein lernendes neuronales System 63 und ein anwendendes neuronales System 64 umfasst.

Im neuronalen System 60 werden Messdaten, die von Bilddaten, Konturdaten und dergleichen gebildet sein können, ausgewertet. Die Messdaten können vom Sicherheitssensor 71 generiert werden oder optional von einem weiteren Sensor, der im vorliegenden Fall von einem Bilderfassungssensor 61 gebildet ist.

Wie beispielsweise in Figur 7 dargestellt werden abhängig von der Auswertung im neuronalen System 60 in der Anlagensteuerung 80 Warnmeldungen und/oder Korrektureingriffe 641 für die Anlage 81 generiert.

Das lernende neuronale System 63 erzeugt durch Lernprozesse Parameter 631, die im anwendenden neuronalen System 64 angewendet werden.

Damit werden die Messdaten im neuronalen System 60 mit erlernten Parametern 631 bewertet.

Zweckmäßig werden die Parameter 631 in realen oder simulierten Trainingssituationen erlernt.

Vorteilhaft werden während deren Arbeitsbetrieb die Parameter 631 fortlaufend erlernt und verbessert.

Im vorliegenden Fall werden im neuronalen System 60 generierte Ausgangssignale der Anlagensteuerung 80 zugeführt, in welcher die Warnmeldungen und/oder Korrektureingriffe 641 generiert werden.

Dabei können optische und/oder akustische Warnmeldungen generiert werden.

Zweckmäßig ist ein Korrektureingriff 641 durch eine Reduzierung von Geschwindigkeiten, Beschleunigungen, Drehmomenten oder Kräften einer Anlage 81 oder eines Anlagenteils gebildet.

Insbesondere ist ein Korrektureingriff 641 durch eine örtliche Anpassung einer Maschinenbewegung und/oder durch ein Ausweichmanöver eines Fahrzeugs gebildet.

Dabei kann bei einer reduzierten Geschwindigkeit und/oder einem Ausweichmanöver die Geometrie des Schutzfeldes 73 des Sicherheitssensors 71 angepasst werden.

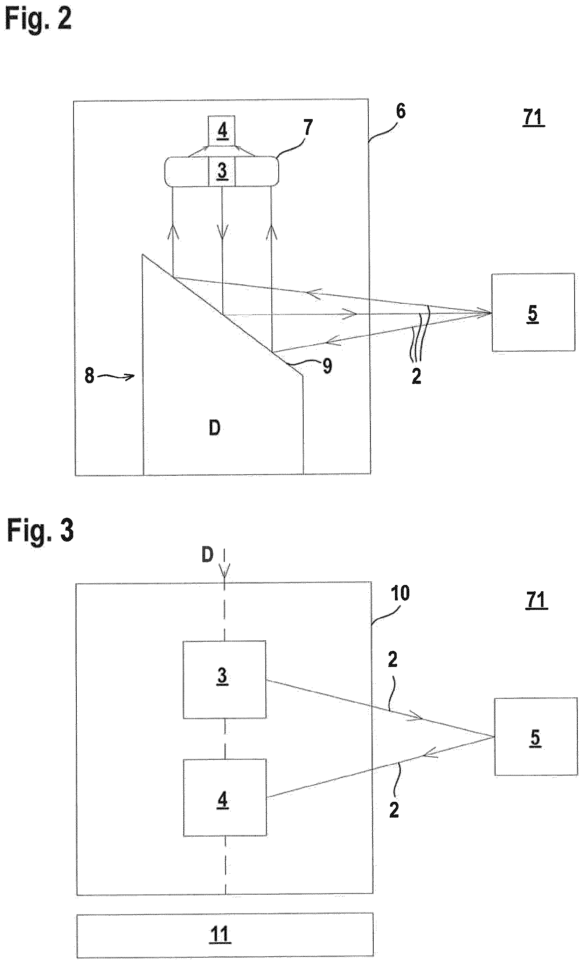

Die Figuren 2 bis 5 zeigen Ausführungsbeispiele von Sicherheitssensoren 71 in Form von distanzmessenden optischen Sensoren, wobei die Distanzmessungen vorteilhaft nach einem Impuls-Laufzeitverfahren oder einem Phasenmessverfahren erfolgen.

Figur 2 zeigt ein Ausführungsbeispiel eines optischen Sensors in Form eines Flächendistanzsensors, das heißt eines scannenden Distanzsensors. Zur Durchführung von Distanzmessungen weist der optische Sensor einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 2 zeigt, werden die Lichtstrahlen 2 an einem zu detektierenden Objekt 5 reflektiert, wobei die entsprechende Lichtlaufzeit der Lichtimpulse zum Objekt 5 und zurück zum optischen Sensor für die Distanzbestimmungen ausgewertet werden.

Wie Figur 2 zeigt, sind die Sensorkomponenten der optischen Sensoren in einem Gehäuse 6 integriert, wobei der Sender 3 sowie der Empfänger 4 mit einer vorgeordneten Empfangsoptik 7 stationär im Gehäuse 6 angeordnet sind. Mit dem optischen Sensor erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Winkelspiegel 9, an dem die Lichtstrahlen 2 abgelenkt werden.

Figur 3 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

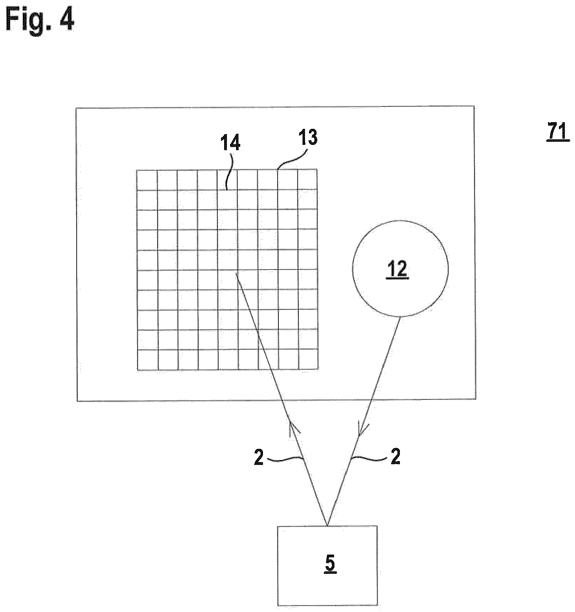

Figur 4 zeigt die Sensorkomponenten eines als Kamerasensor ausgebildeten Sicherheitssensors 71. Dieser Sicherheitssensor 71 weist eine Lichtstrahlen 2 emittierende Beleuchtungseinheit 12 und als Empfänger einen Bildsensor 13 auf, der in Form eines CCD- oder CMOS-Arrays mit einer matrixförmigen Anordnung von Empfangselementen 14 ausgebildet sein kann.

Generell weist jeder Sicherheitssensor 71 eine nicht dargestellte Auswerteeinheit auf, in der die Empfangssignale des Empfängers 4 ausgewertet werden. Die Auswertung erfolgt derart, dass eine Schutzfeldüberwachung 710 (Figur 7) durchgeführt wird und abhängig von einem Objekteingriff in einem Schutzfeld 73 ein binäres Schaltsignal 40 generiert wird, dessen Schaltzustände angeben, ob ein Objekt 5 im Schutzfeld 73 vorhanden ist oder nicht. Ist ein Objekt 5 im Schutzfeld 73 vorhanden, wird durch den entsprechenden Schaltzustand des Schaltsignals 40 eine Sicherheitsfunktion derart ausgelöst, dass die gefahrbringende Anlage 81 stillgesetzt wird, so dass von dieser keine Gefahren mehr ausgehen können.

Für den Einsatz im Bereich der Sicherheitstechnik sind die optische Sensoren gemäß der Figuren 2 bis 5 als Sicherheitssensor 71 ausgebildet und weisen einen fehlersicheren Aufbau auf, der beispielsweise durch eine redundante Auswerteeinheit in Form zweier sich zyklisch gegenseitig überwachender Rechnereinheiten realisiert werden könnte.

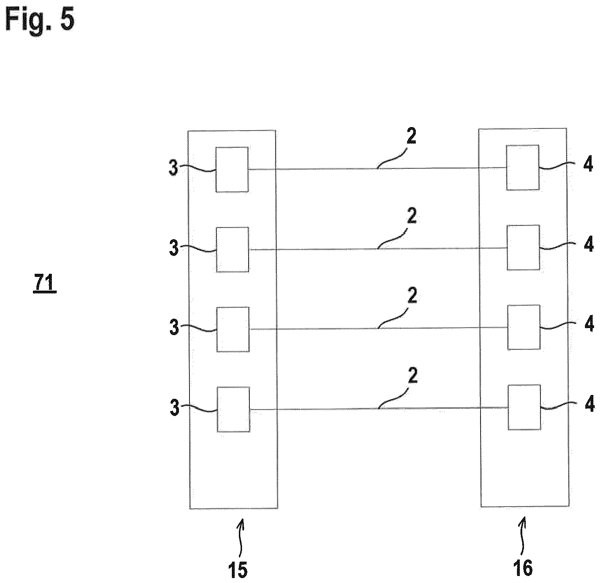

Figur 5 zeigt einen Sicherheitssensor 71 in Form eines Lichtvorhangs, mittels dessen als Schutzfeld 73 ein flächiger Überwachungsbereich überwacht wird. Der Lichtvorhang weist eine Sendereinheit 15 und eine Empfängereinheit 16 auf, deren Komponenten jeweils in einem Gehäuse integriert sind und die an gegenüberliegenden Rändern des Überwachungsbereichs angeordnet sind.

In der Sendereinheit 15 befindet sich eine Reihenanordnung von Lichtstrahlen 2 emittierenden Sendern 3, in der Empfängereinheit 16 befindet sich eine entsprechende Anzahl von Empfängern 4. Jeweils ein Sender 3 und ein gegenüberliegender Empfänger 4 bilden eine Strahlachse. Die Strahlachsen werden durch eine nicht dargestellte Sendersteuerung und eine optische Synchronisierung zyklisch einzeln nacheinander aktiviert. Die Objektdetektion erfolgt nach dem Lichtschrankenprinzip. In einer Auswerteeinheit erfolgt hierzu eine Schwellwertbewertung der Empfangssignale der Empfänger 4 zur Generierung eines binären Schaltsignals 40. In der Auswerteeinheit wird ein Schaltsignal 40 mit dem Schaltzustand "freier Überwachungsbereich" generiert, falls die Lichtstrahlen 2 aller Strahlachsen ungehindert auf den jeweiligen Empfänger 4 treffen. Wird wenigstens eine Strahlachse durch einen Objekteingriff unterbrochen, wird in der Auswerteeinheit ein Schaltsignal 40 mit dem Schaltzustand "Objekt vorhanden" generiert. Die Auswerteeinheit weist einen redundanten Aufbau auf.

Figur 6 zeigt den Verlauf von zeitlich variierender Sequenzen 31, 32 von Messdaten des Sicherheitssensors 71 oder des Bilderfassungssensors 61, die im vorliegenden Fall von Bildern 21 bis 25 gebildet sind. Prinzipiell können die Sequenzen 31, 32 auch räumlich oder abhängig von anderen Zustandsgrößen variieren.

Die neuere Sequenz 31 liegt um das Zeitintervall 41 vor dem Schalten des Schaltsignals 40. Die ältere Sequenz 32 liegt um das Zeitintervall 42 vor dem Schalten des Schaltsignals 40. Mit dem Schalten des Schaltsignals 40 von 0 auf 1 wird die Sicherheitsfunktion ausgelöst. Da die Sequenzen 31, 32 vor diesem Schaltvorgang vorliegen, können Warnmeldungen und/oder Korrektureingriffe 641 anhand der Sequenzen 31, 32 generiert werden, bevor die Sicherheitsfunktion ausgelöst wird. Im Idealfall kann dadurch die Auslösung der Sicherheitsfunktion vermieden werden.

In Figur 7 ist mit der Bezugsziffer 50 eine beobachtbare Situation 50 an einer Anlage 81 dargestellt. Je nach Anlage 81 kann diese von einem Fahrbereich vor einem Fahrzeug, einem Zugangsbereich vor einer Maschine beziehungsweise einem Roboter gebildet sein. Die beobachtbare Situation 50 kann die gesamte oder Teil-Szenerie einer Maschine mit Personenumfeld oder im Umfeld anderer Maschinen/Fahrzeuge sein. Weiterhin kann die beobachtbare Situation 50 die gesamte oder Teil-Szenerie eines Roboters mit Personenumfeld oder im Umfeld anderer Maschinen/Fahrzeuge sein.

Mit dem Sicherheitssensor 71 erfolgt eine Schutzfeldüberwachung 710. Wird mit dem Sicherheitssensor 71 ein Objekteingriff im Schutzfeld 73 registriert, generiert dieser ein Schaltsignal 40, das zur Auslösung einer Sicherheitsfunktion führt, die im vorliegenden Fall von einem Abschaltsignal 711 für die Anlage 81 gebildet ist. Eine Abschaltinformation 712, die Informationen über das Abschaltsignal 711 und gegebenenfalls hierzu gehörende weitere Informationen enthält, beispielsweise genauere Angaben über die Schutzfeldverletzung, wird vom Sicherheitssensor 71 dem neuronalen lernenden System 63 zugeführt, um diese Informationen zum Lernen der Parameter 631 zu nutzen.

Das neuronale System 60 bildet ein selbstlernendes System derart, dass mit dem lernenden neuronalen System 63 Parameter 631 erzeugt werden, die im anwendenden neuronalen System 64 angewendet werden, um Ausgangssignale zu generieren, durch welche in der Anlagensteuerung 80 Warnmeldungen und/oder Korrektureingriffe 641 für die Anlage 81 generiert werden.

Das neuronale System 60 erhält als Eingangsgrößen Randparameter 601 in Form von Einflussgrößen wie Tageszeit, Wetterinformationen, Angabe der Schicht für die Anlage 81 und dergleichen.

Der Bilderfassungssensor 61 erfasst einen Sichtbereich 620 und generiert Bilddaten 610, die einer Vorverarbeitungseinheit 62 zugeführt werden. Die dort generierten vorverarbeiteten Bilddaten 621 werden dem lernenden neuronalen System 63 zur Festlegung der Parameter 631 und dem anwendenden neuronalen System 64 zur Generierung der Ausgangssignale zugeführt.

Die erlernten Parameter 631 werden vom lernenden neuronalen System 63 dem anwendenden neuronalen System 64 zugeführt.

Das anwendende neuronale System 64 generiert ein Beeinflussungssignal, das einen optischen oder akustischen Warnmelder aktiviert, um eine Warnmeldung abzugeben. Weiterhin erfolgt durch das Beeinflussungssignal ein Korrektureingriff 641 in der Anlage 81. Der Korrektureingriff 641 kann eine Verlangsamung einer Arbeitsbewegung der Anlage 81 sein. Weiterhin kann der Korrektureingriff 641 das Einleiten eines Ausweichmanövers eines die Anlage 81 bildenden Fahrzeugs sein. Als weiterer Korrektureingriff 641 erfolgt eine Schutzfeldbeeinflussung 811 des Sicherheitssensors 71.

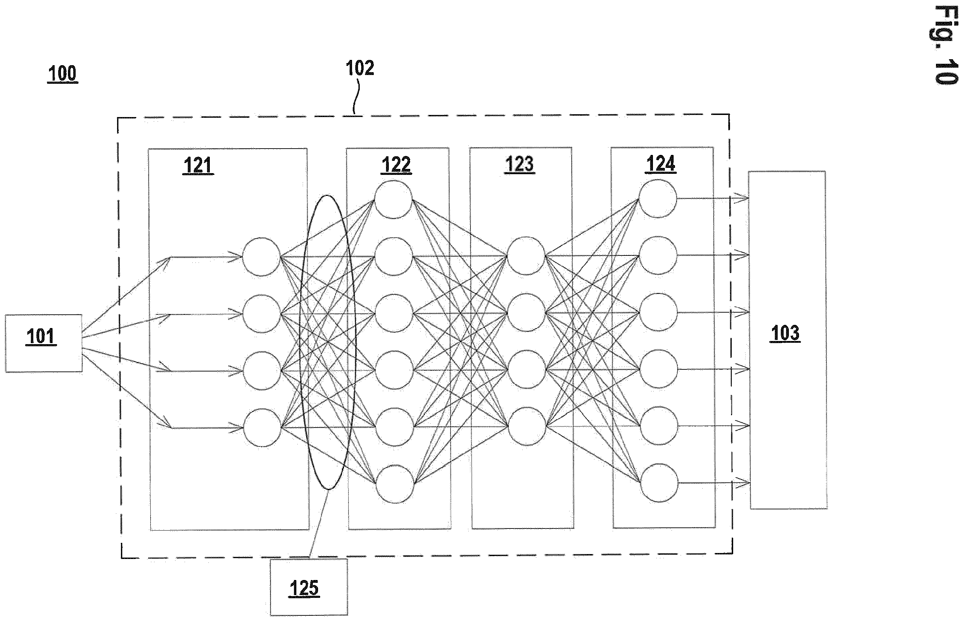

Von der Anlage 81 wird ein Systembeeinflussungssignal 812 dem neuronalen System 60 zugeführt, welches die neuronalen Systeme 63, 64 beeinflusst. Insbesondere können dadurch einzelne neuronale Netze 100 (Figur 10), die die neuronalen Systeme 63, 64 ausbilden, ausgewählt und kombiniert werden.

Das neuronale System 60 weist einen Modifizierer 65 auf, mittels dessen die Beeinflussungssignale modifiziert werden können. Damit können insbesondere variierende Korrektureingriffe 641 in Form von Anlageneingriffen erzeugt werden, um aus dem späteren Verhalten den optimalen Anlageneingriff zu erlernen.

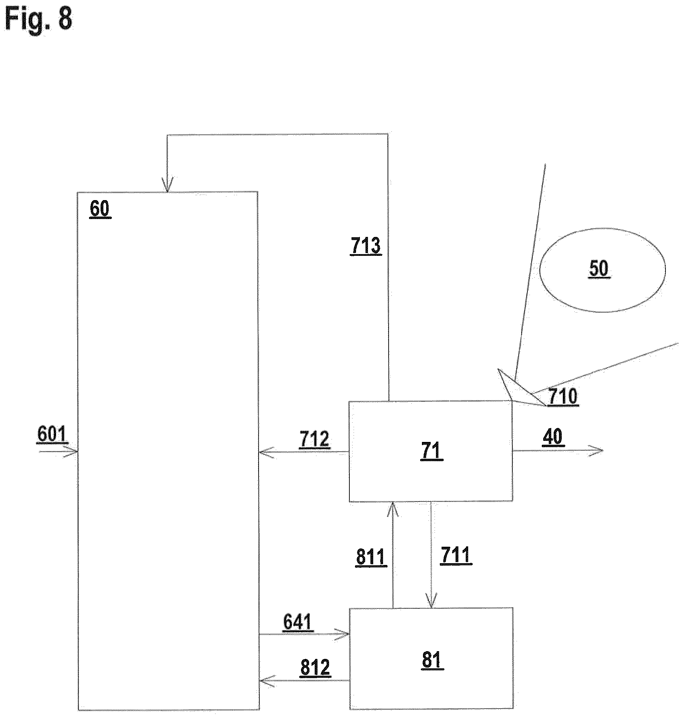

Figur 8 zeigt eine Variante der Ausführungsform gemäß Figur 7.

Bei der Ausführungsform gemäß Figur 8 wird der Sicherheitssensor 71 nicht nur zur Schutzfeldüberwachung 710 eingesetzt. Vielmehr nimmt der Sicherheitssensor 71 auch Messdaten in Form von Bilddaten 610 oder Konturdaten auf, die als Eingangsgrößen 713 dem neuronalen System 60 zugeführt werden. Ein separater Bilderfassungssensor 61 wird in diesem Fall nicht benötigt.

Ansonsten entspricht die Funktionsweise der Ausführungsform gemäß Figur 8 der Ausführungsform gemäß Figur 7.

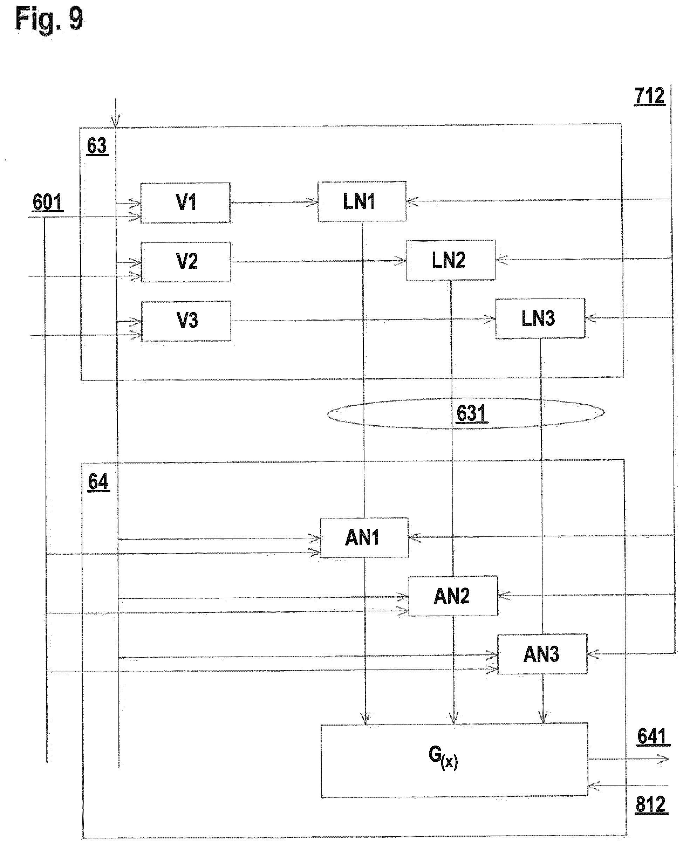

Figur 9 zeigt eine spezifische Ausbildung der Funktionsweise des neuronalen Systems 60 gemäß Figur 7.

Eingangsgrößen 713, insbesondere Bilddaten 610 oder vorverarbeitete Bilddaten 611, 621 werden mit Versätzen V1, V2, V3 lernenden neuronalen Netzen LN1, LN2, LN3 zugeführt. Dadurch können die anwendenden neuronalen Systeme 64 vorausschauend auf Situationen reagieren und eingreifen. Die erlernten Parameter 631 werden anwendenden Entscheidungsbäumen AN1, AN2, AN3 zugeführt, wobei die anwendenden Entscheidungsbäume AN1, AN2, AN3 die Daten ohne Versatz V1, V2, V3 (wie gezeigt) oder anderen Versätzen (nicht dargestellt) zugeführt bekommen. Ebenso könnten andere externe Informationen oder die Abschaltinformationen 712 zusätzlich in die neuronalen Netze 100 eingespeist werden. Das Erlernen von versetzten Situationen kann die Vorhersagequalität von Korrekturmaßnahmen erheblich verbessern. Die Ausgänge der anwendenden neuronalen Systeme 64 werden zum Beispiel mit einer Gewichtungsfunktion G(x) bewertet. Die Art der Gewichtung kann gegebenenfalls durch die Anlagensteuerung 80 situationsabhängig variiert werden. Die Gewichtung kann im einfachsten Fall nur eine einfache Auswahl sein.

Figur 10 zeigt den Aufbau eines neuronalen Netzes 100, das im neuronalen System 60 eingesetzt werden kann. Das neuronale System 60 weist einen Algorithmus 102 auf.

Das neuronale Netz 100 besteht aus Einzelfunktionen, die in Schichten 121 bis 124 organisiert sind. Die Enzelfunktionen können Filterfunktionen, Funktionszusammenhänge, Übertragungsfunktionen, Entscheidungsmatrizen oder neuronale Vernetzungen sein.

Die Schicht 121 dient zur Entgegennahme von Eingangswerten 101. Die Schichten 122, 123 dienen zur Abbildung von Zwischengrößen. Die Schicht 124 bildet eine Ausgangsschicht, in der die Ergebnisse der vorigen Schichten 121 bis 123 zu einem Gesamtergebnis zusammengefasst werden, wodurch Ausgangsgrößen 103 generiert werden. Verknüpfungen 125 verknüpfen einzelne Schichten 121 bis 124, zweckmäßig mit Gewichtungen von Einzelgrößen.

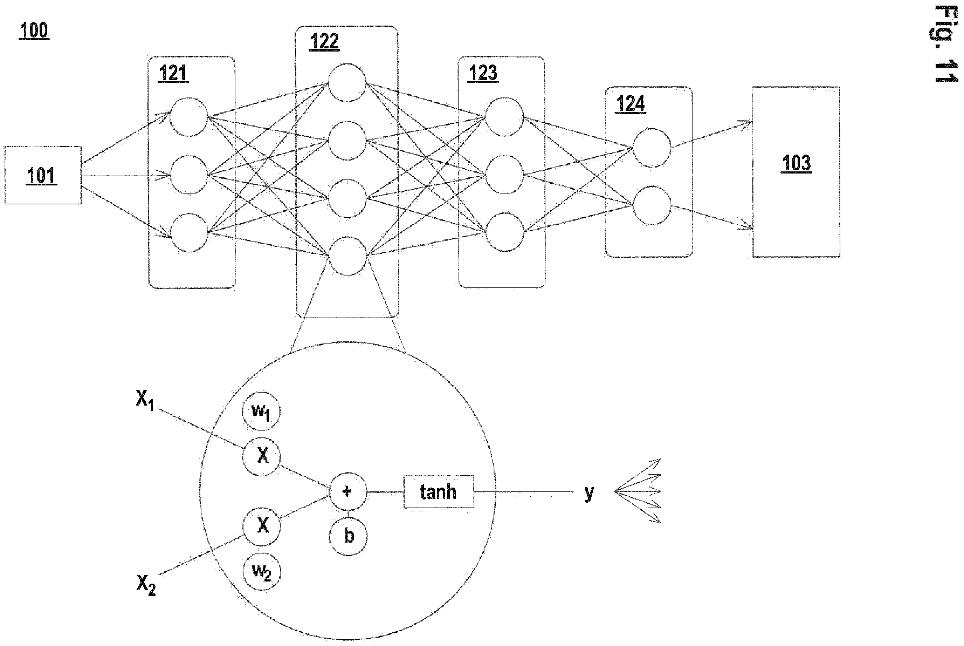

Figur 11 zeigt eine spezifische Ausgestaltung des neuronalen Netzes 100 gemäß Figur 10. Bei dieser Art des neuronalen Netzes 100 sind alle Neuronen einer Schicht 121 bis 124 mit jedem Neuron der nachfolgenden Schicht 122, 123, 124 verknüpft. Die Eingangssignale $x_n$ eines Neurons werden gewichtet $w_n$ und aufsummiert. Zusätzlich wird ein weiteres Gewicht b addiert. Zum Abschluss wird das Zwischenergebnis einer Transferfunktion (Aktivierungsfunktion) f(z) unterworfen, um das Ausgangssignal y des Neurons zu erhalten.

Dabei bedeuten in Figur 11:

$x_1, x_2$: Eingangswerte 101 einer Einzelfunktion/eines Neurons
$w_1, w_2$, b Gewichtung.
y: Ausgangsgröße(n) 103 einer Einzelfunktion/eines Neurons mit Transferfunktion f(z). (Zum Beispiel f(z) = tanh(z) (Beispielhaft entsprechend Figur 11),

$$\text{ReLU } f(z) = \begin{cases} dz & \text{für } z \geq 0 \\ 0 & \text{sonst} \end{cases}' \text{ lineare Funkti-}$$

on f(z) = a · z + c

$$f(z) = \frac{1}{1+e^{-z'}}$$

Sigmoid $\quad$ etc.)

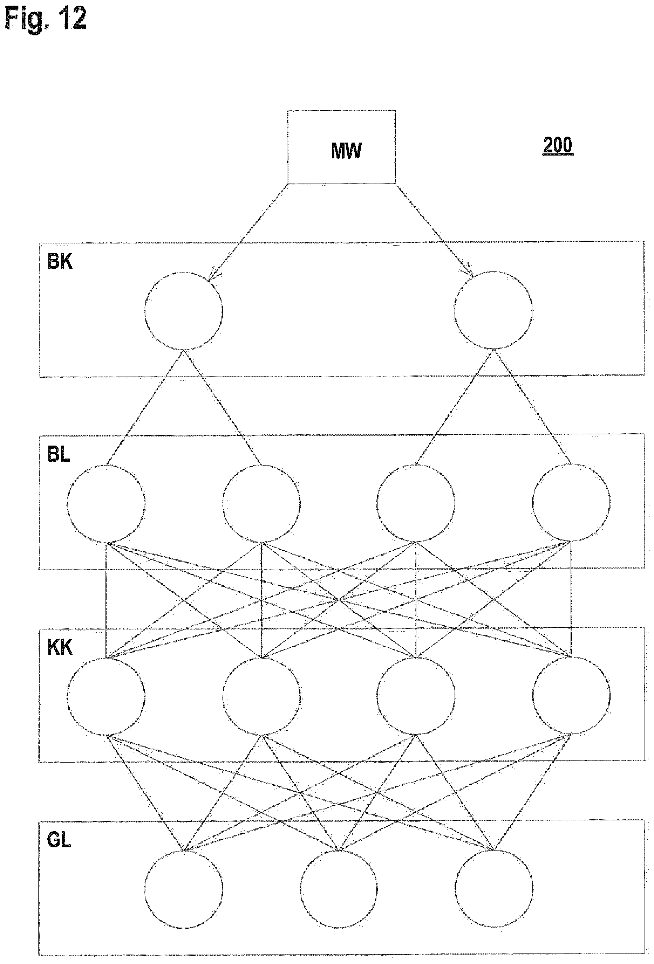

Figur 12 zeigt einen neuronalen Entscheidungsbaum 200 für das neuronale System 60.

Inputgrößen in Form von MW werden über Bewertungsknoten BK einem Binning Layer BL zugeführt. Aus dem Binning Layer werden Kombinationen (zum Beispiel Kronecker Produkt KK) erzeugt, die einem Gewichtungslayer GL zugeführt werden. Daraus werden in einem Gewichtungslayer GL ein oder mehrere Ausgangsgrößen 103 durch Gewichtung erzeugt.

B ezugszei chenli ste

| | |
|---|---|
| (1) | Überwachungseinrichtung |
| (2) | Lichtstrahl |
| (3) | Sender |
| (4) | Empfänger |
| (5) | Objekt |
| (6) | Gehäuse |
| (7) | Empfangsoptik |
| (8) | Ablenkeinheit |
| (9) | Winkelspiegel |
| (10) | Messkopf |
| (11) | Sockel |
| (12) | Beleuchtungseinheit |
| (13) | Bildsensor |
| (14) | Empfangselement |
| (15) | Sendereinheit |
| (16) | Empfängereinheit |
| (21-25) | Bild |
| (31, 32) | Sequenz |
| (40) | Schaltsignal |
| (41, 42) | Zeitintervall |
| (50) | beobachtbare Situation |
| (60) | neuronales System |
| (61) | Bilderfassungssensor |
| (62) | Vorverarbeitungseinheit |
| (63) | lernendes neuronales System |
| (64) | anwendendes neuronales System |
| (65) | Modifizierer |
| (71) | Sicherheitssensor |
| (72) | Gefahrenbereich |
| (73) | Schutzfeld |
| (80) | Anlagensteuerung |
| (81) | Anlage |
| (100) | neuronales Netz |
| (101) | Eingangswert |
| (102) | Algorithmus |
| (103) | Ausgangsgrößen |
| (121-124) | Schicht |
| (125) | Verknüpfung |
| (200) | neuronaler Entscheidungsbaum |
| (601) | Randparameter |
| (610) | Bilddaten |
| (611) | Bilddaten, vorverarbeitet |
| (620) | Sichtbereich |
| (621) | Bilddaten, vorverarbeitet |
| (631) | Parameter |
| (641) | Korrektureingriff |
| (710) | Schutzfeldüberwachung |
| (711) | Abschaltsignal |
| (712) | Abschaltinformation |
| (713) | Eingangsgrößen |
| (811) | Schutzfeldbeeinflussung |
| (812) | Systembeeinflussungssignal |
| D | Drehachse |
| MW | Inputgröße |
| BK | Bewertungsknoten |
| BL | Binning Layer |
| KK | Kronecker Produkt |
| GL | Gewichtungslayer |
| t | Zeit |
| V1-V3 | Versatz |
| LN1-LN3 | lernendes neuronales Netz |
| AN1-AN3 | anwendender Entscheidungsbaum |

**Patentansprüche**

1. Überwachungseinrichtung (1) mit einem Sicherheitssensor (71) und einer von einer Anlagensteuerung (80) gesteuerten Anlage (81), wobei mit dem Sicherheitssensor (71) ein Gefahrenbereich (72) überwacht wird, wobei bei Registrieren eines Objekteingriffs im Gefahrenbereich (72) mittels des Sensors ein Schaltsignal (40) generiert wird, das an die Anlagensteuerung (80) ausgegeben wird, wodurch eine Sicherheitsfunktion für die Anlage (81) ausgelöst wird, **dadurch gekennzeichnet, dass** ein Auswertesystem vorgesehen ist, in welchem Messdaten des Sicherheitssensors (71) oder eines Sensors durch wenigstens ein neuronales System (60) bewertet werden, wobei abhängig von dieser Bewertung Warnmeldungen und/oder Korrektureingriffe (641) für Bewegungsabläufe der Anlage (81) generiert werden.

2. Überwachungseinrichtung (1) nach Anspruch 1, **dadurch gekennzeichnet, dass** mit dem Sicherheitssensor (71) ein Schutzfeld (73) überwacht wird, wobei im Sicherheitssensor (71) ein binäres Schaltsignal (40) generiert wird, dessen Schaltzustände angeben, ob ein Objekt im Schutzfeld (73) vorhanden ist oder nicht.

3. Überwachungseinrichtung (1) nach einem der Ansprüche 1 oder 2, **dadurch gekennzeichnet, dass** der Sicherheitssensor (71) ein optischer Sensor oder ein Radarsensor ist.

4. Überwachungseinrichtung (1) nach Anspruch 3, **dadurch gekennzeichnet, dass** der Sicherheitssensor (71) ein Lichtvorhang, ein Flächendistanzsensor oder ein Kamerasensor ist.

**5.** Überwachungseinrichtung (1) nach einem der Ansprüche 1 bis 4, **dadurch gekennzeichnet, dass** der Sensor ein Bilderfassungssensor (61) ist.

**6.** Überwachungseinrichtung (1) nach einem der Ansprüche 1 bis 5, **dadurch gekennzeichnet, dass** die Anlage (81) eine stationäre Maschine oder ein Fahrzeug ist.

**7.** Überwachungseinrichtung (1) nach einem der Ansprüche 1 bis 6, **dadurch gekennzeichnet, dass** im neuronalen System (60) generierte Ausgangssignale der Anlagensteuerung (80) zugeführt werden, in welcher die Warnmeldungen und/oder Korrektureingriffe (641) generiert werden.

**8.** Überwachungseinrichtung (1) nach einem der Ansprüche 1 bis 7, **dadurch gekennzeichnet, dass** optische und/oder akustische Warnmeldungen generiert werden.

**9.** Überwachungseinrichtung (1) nach einem der Ansprüche 1 bis 8, **dadurch gekennzeichnet, dass** ein Korrektureingriff (641) durch eine Reduzierung von Geschwindigkeiten, Beschleunigungen, Drehmomenten oder Kräften einer Anlage (81) oder eines Anlagenteils gebildet ist.

**10.** Überwachungseinrichtung (1) nach Anspruch 6, **dadurch gekennzeichnet, dass** ein Korrektureingriff (641) durch eine örtliche Anpassung einer Maschinenbewegung und/oder durch ein Ausweichmanöver eines Fahrzeugs gebildet ist.

**11.** Überwachungseinrichtung (1) nach einem der Ansprüche 9 und 10, **dadurch gekennzeichnet, dass** bei einer reduzierten Geschwindigkeit und/oder einem Ausweichmanöver die Geometrie des Schutzfeldes (73) des Sicherheitssensors (71) angepasst wird.

**12.** Überwachungseinrichtung (1) nach einem der Ansprüche 1 bis 11, **dadurch gekennzeichnet, dass** das neuronale System (60) wenigstens ein neuronales Netz (100) und/oder wenigstens einen neuronalen Entscheidungsbaum (200) umfasst.

**13.** Überwachungseinrichtung (1) nach einem der Ansprüche 1 bis 12, **dadurch gekennzeichnet, dass** die Messdaten im neuronalen System (60) mit erlernten Parametern (631) bewertet werden.

**14.** Überwachungseinrichtung (1) nach Anspruch 13, **dadurch gekennzeichnet, dass** die Parameter (631) in realen oder simulierten Trainingssituationen erlernt werden.

**15.** Überwachungseinrichtung (1) nach Anspruch 14, **dadurch gekennzeichnet, dass** während deren Arbeitsbetriebs die Parameter (631) fortlaufend erlernt und verbessert werden.

**16.** Überwachungseinrichtung (1) nach einem der Ansprüche 1 bis 15, **dadurch gekennzeichnet, dass** die dem neuronalen System (60) zugeführten Messdaten zeitlich oder räumlich versetzte Sequenzen (31, 32) ausbilden.

**17.** Überwachungseinrichtung (1) nach einem der Ansprüche 13 bis 16, **dadurch gekennzeichnet, dass** das neuronale System (60) ein lernendes neuronales System (63), in welchem Parameter (631) erzeugt werden, und ein anwendendes neuronales System (64), in welchem die erzeugten Parameter (631) verwendet werden, aufweist.

**18.** Überwachungseinrichtung (1) nach einem der Ansprüche 16 und 17, **dadurch gekennzeichnet, dass** das lernende neuronale System (63) mehrere neuronale Netze (100) oder neuronale Entscheidungsbäume (200) aufweist, welchen zeitlich und/oder räumlich versetzte Messdaten zugeführt werden.

**19.** Überwachungseinrichtung (1) nach Anspruch 18, **dadurch gekennzeichnet, dass** das Auswertesystem oder die Anlagensteuerung (80) die Ausgänge der neuronalen Netze (100) des lernenden neuronalen Systems (63) auswählt oder kombiniert.

**20.** Überwachungseinrichtung (1) nach Anspruch 19, **dadurch gekennzeichnet, dass** die Auswahl oder Kombination abhängig von Anlagenzuständen durchgeführt wird.

**21.** Überwachungseinrichtung (1) nach einem der Ansprüche 13 bis 20, **dadurch gekennzeichnet, dass** Umgebungsbedingungen und/oder betriebsrelevante Randbedingungen in Lernprozesse zum Einlernen von Parametern (631) einbezogen sind.

**22.** Überwachungseinrichtung (1) nach einem der Ansprüche 1 bis 21, **dadurch gekennzeichnet, dass** Warnmeldungen und/oder Korrektureingriffe (641) durch einen Modifizierer (65) veränderbar sind.

**23.** Überwachungseinrichtung (1) nach Anspruch 22, **dadurch gekennzeichnet, dass** mit dem Modifizierer (65) durchgeführte Veränderungen von Warnmeldungen und/oder Korrektureingriffen (641) durch einen Zufallsgenerator oder einen deterministischen Algorithmus (102) beeinflusst sind.

**24.** Überwachungseinrichtung (1) nach einem der Ansprüche 22 oder 23, **dadurch gekennzeichnet, dass** mit dem Modifizierer (65) durchgeführte Veränderungen von Warnmeldungen und/oder Korrektureingriffen (641) abhängig von der Häufigkeit von mittels des Sicherheitssensors (71) ausgelösten Sicherheitsfunktionen durchgeführt werden.

25. Verfahren zum Betrieb einer Überwachungseinrichtung (1) mit einem Sicherheitssensor (71) und einer von einer Anlagensteuerung (80) gesteuerten Anlage (81), wobei mit dem Sicherheitssensor (71) ein Gefahrenbereich (72) überwacht wird, wobei bei Registrieren eines Objekteingriffs im Gefahrenbereich (72) mittels des Sensors ein Schaltsignal (40) generiert wird, das an die Anlagensteuerung (80) ausgegeben wird, wodurch eine Sicherheitsfunktion für die Anlage (81) ausgelöst wird, **dadurch gekennzeichnet, dass** ein Auswertesystem vorgesehen ist, in welchem Messdaten des Sicherheitssensors (71) oder eines Sensors durch wenigstens ein neuronales System (60) bewertet werden, wobei abhängig von dieser Bewertung Warnmeldungen und/oder Korrektureingriffe (641) für Bewegungsabläufe der Anlage (81) generiert werden.

**Fig. 1**

1

81

80

72

73

71

61

63    64    600

60

**Fig. 2**

**Fig. 3**

# Fig. 4

Fig. 5

71

## Fig. 6

## Fig. 7

# Fig. 8

# Fig. 9

**Fig. 10**

Fig. 11

# Fig. 12

Europäisches
Patentamt

European
Patent Office

Office européen
des brevets

**EUROPÄISCHER RECHERCHENBERICHT**

Nummer der Anmeldung

EP 21 15 8487

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 218917 A1 (BOSCH GMBH ROBERT [DE]) 25. April 2019 (2019-04-25) * Absatz [0020]; Abbildungen 1-3 * ----- | 1-25 | INV. G06N3/00 F16P3/12 |
| X | EP 3 730 250 A1 (WUERTH ADOLF GMBH & CO KG [DE]) 28. Oktober 2020 (2020-10-28) * Absatz [0021]; Abbildungen 1-4 * ----- | 1-25 | |

RECHERCHIERTE
SACHGEBIETE (IPC)

F16P
G06N

Der vorliegende Recherchenbericht wurde für alle Patentansprüche erstellt

| Recherchenort | Abschlußdatum der Recherche | Prüfer |
|---|---|---|
| Den Haag | 2. August 2021 | Lantsheer, Martijn |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 21 15 8487

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2021

| Im Recherchenbericht angeführtes Patentdokument | Datum der Veröffentlichung | Mitglied(er) der Patentfamilie | Datum der Veröffentlichung |
|---|---|---|---|
| DE 102017218917 A1 | 25-04-2019 | CN 111226178 A | 02-06-2020 |
| | | DE 102017218917 A1 | 25-04-2019 |
| | | EP 3701340 A1 | 02-09-2020 |
| | | JP 2021500668 A | 07-01-2021 |
| | | KR 20200079489 A | 03-07-2020 |
| | | WO 2019081135 A1 | 02-05-2019 |
| EP 3730250 A1 | 28-10-2020 | EP 3730250 A1 | 28-10-2020 |
| | | US 2020342237 A1 | 29-10-2020 |

Für nähere Einzelheiten zu diesem Anhang : siehe Amtsblatt des Europäischen Patentamts, Nr.12/82